# Europäisches Patentamt
## European Patent Office
## Office européen des brevets

(19)

(11) Veröffentlichungsnummer: **0 154 912**
**B1**

(12) **EUROPÄISCHE PATENTSCHRIFT**

(45) Veröffentlichungstag der Patentschrift:
23.08.89

(21) Anmeldenummer: 85102368.9

(22) Anmeldetag: 02.03.85

(51) Int. Cl.⁴: **H 02 K 15/06**

(54) Arbeitsverfahren und Gerät zum Bewickeln der Statoren von Elektromotoren.

(30) Priorität: 16.03.84 DE 3409684

(43) Veröffentlichungstag der Anmeldung:
18.09.85 Patentblatt 85/38

(45) Bekanntmachung des Hinweises auf die Patenterteilung:
23.08.89 Patentblatt 89/34

(84) Benannte Vertragsstaaten:
AT BE CH DE FR GB IT LI LU NL SE

(56) Entgegenhaltungen:
AT-B-249 170
DE-A-2 443 380
DE-B-1 589 932
DE-B-2 658 891

(73) Patentinhaber: **Veser, Franz, Kanalstrasse 16, D-7980 Ravensburg (DE)**

(72) Erfinder: **Veser, Franz, Kanalstrasse 16, D-7980 Ravensburg (DE)**

(74) Vertreter: **Eisele, Eberhard, Dipl.- Ing., Patentanwälte Eisele & Dr. Otten Seestrasse 42, D-7980 Ravensburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung betrifft ein Arbeitsverfahren zur Bewicklung der Statoren von Elektromotoren, insbesondere von Kleinmotoren, wobei die Spulen zwischen zwei spreizbaren elastischen Zungen von Einziehnadeln einzeln oder in Gruppen eingesetzt und durch mechanische Mittel in die Statornuten eingebracht werden, und wobei die Spulengruppen nach der Polzahl ausgelegt sind, so dass das Zusammenschalten der Spulen entsprechend der Polarität vor dem Einziehen vorgenommen werden kann.

Die in der Praxis bewährten Einziehnadeln der erwähnten Art sind z. B. durch die DE-B-2 658 891 und durch Werbeliteratur einschlägiger Firmen bekannt geworden. Die dort gezeigten Ausführungen und Geräte sind insbesondere für die Statorbewicklung von Motoren mittlerer und grösserer Abmessungen vorgesehen. Dabei sind die räumlichen Verhältnisse, insbesondere der Innendurchmesser des Stators und die Teilungsabstände der Statornuten ausreichend, um die Verwendung der bekannten Einziehnadeln zum Herstellen von Mehrschichtwicklungen bei allen praktisch vorkommenden Polzahlen ohne besondere Schwierigkeiten zu ermöglichen. Die stark beanspruchten Einziehnadeln können dabei entsprechend dimensioniert und so gestaltet sein, dass ihre Handhabung und Funktion wesentliche technische und wirtschaftliche Fortschritte gegenüber den früheren Wicklungsverfahren ergeben, wobei auch die kostengünstige Herstellung der Einziehnadeln und deren Standzeit als positive Faktoren anzusehen sind.

Es hat sich jedoch gezeigt, dass sich für die Bewicklung der Statoren von kleinen und kleinsten Elektromotoren die bekannten bewährten Einziehnadeln und deren Arbeitsverfahren in der bisherigen Ausbildung und Art nicht, oder nur bedingt eignen. Diese Einschränkung ist darin begründet, dass der Durchmesser des Statorinnenraumes und die Teilungsabstände der Nuten und der Aufnahmeschlitz der Nuten bei Kleinmotoren Dimensionen besitzen, welche einen vollmechanischen Einsatz der bekannten Einziehnadeln sehr erschweren oder unmöglich machen.

Man ist daher nach wie vor darauf angewiesen, die Bewicklung von Kleinstatoren in Handarbeit durch das sogenannte Einträufeln der Spulendrähte in die Nuten durchzuführen, wobei bekanntlich ausser einem hohen Aufwand an Arbeitszeit und körperlicher Anstrengung auch die Einhaltung verschiedener Qualitätsforderungen problematisch sind. Dies betrifft insbesondere die Zuverlässigkeit der Arbeitskräfte, die Einhaltung des Nutenfüllfaktors und die Vermeidung von Beschädigungen des Drahtlacks. Aus diesen möglichen Arbeitsfehlern kann auch eine nachteilig hohe Ausfallquote des Produkts entstehen. Dazu kommt noch, dass bisher auch die weiteren Nebenarbeiten für die Herstellung von gebrauchsfertigen Statoren, also das polrichtige Zusammenschalten der Phasen, die Endformung der Spulenköpfe und die Phasenisolation, ebenfalls in zeitaufwendiger Handarbeit durchgeführt werden müssen, wobei der mehrmalige Wechsel der Arbeitslage des Werkstücks zusätzliche Arbeitszeit beansprucht.

Ausgehend von der praktisch bewährten Technologie, das Statorbewickeln unter Verwendung der vorerwähnten bekannten Einziehnadeln mechanisch durchzuführen, strebt die Erfindung an, die hohe Effektivität dieser Technologie auch bei Kleinstatoren anwendbar zu machen und dadurch das bisherige Hand-Arbeitsverfahren weitgehend auszuschalten. Im engeren Sinne besteht daher die Aufgabe der Erfindung insbesondere darin, die bekannte Einziehnadel dem vorliegenden Verwendungszweck in kostengünstiger Weise anzupassen und für den mechanischen Einsatz dieser speziellen Einziehnadeln ein brauchbares Arbeitsverfahren zu finden.

Ausserdem sollen auch die weiteren Arbeiten und Mittel für das gebrauchsfertige Herrichten des Stators in den Arbeitsprozess so integriert werden, dass auch die Nebenzeiten gegenüber bisher wesentlich verkleinert werden und eine Steigerung der Produktqualität gewährleistet ist.

Diese Aufgaben sind durch das im Anspruch 1 angegebene Arbeitsverfahren und durch das Einziehwerkzeug nach dem Anspruch 4 in vorteilhafter Weise gelöst. Dabei ist erreicht, dass nunmehr das eigentliche Statorbewickeln für Klein- und Kleinstmotoren ausschließlich mechanisch und wesentlich wirtschaftlicher als bisher durchführbar ist und eine praktisch fehlerfreie Statorbewicklung bei einem rationellen technischen Aufwand gewährleistet ist. Ausserdem ist die Handhabung des erfindungsgemässen Arbeitsgerätes leicht erlernbar, so dass auch verschaltete Etagenwicklungen von Hilfskräften einwandfrei durchführbar sind.

Die im Arbeitsverfahren nach den Ansprüchen 1 - 3 gekennzeichneten Verfahrensschritte ermöglichen in technisch logischer und zeitsparender Folge die Vorbereitung und Durchführung einer mechanisch ablaufenden Bewicklung von Kleinstatoren, wobei alle Spulen eine Wicklungsschicht (Etage) in einem einzigen Arbeitsgang zugleich eingezogen werden können. Durch die dabei vorgesehene vertikale Einspannlage des Stators ist dieser in einer übersichtlichen, leicht zugänglichen Arbeitslage festgehalten, welche jedoch nach Bedarf veränderbar und fixierbar ist, wobei die notwendigen Hilfsvorrichtungen im Gerät integriert sind. Diese dienen insbesondere als drahtschonende Einziehhilfen und Führungsmittel für die Spulenstränge, so dass die Spulenlagen nach dem Einziehen nur noch eine geringe Nachformung benötigen.

Die Sachansprüche 4 - 13 befassen sich mit der Gestaltung des Einziehwerkzeuges. Das im Anspruch 4 gekennzeichnete Einziehwerkzeug und die Mittel für die rasche und sichere Befestigung der Einziehnadeln am Werkzeug unter Verwendung von zwei mit Abstand übereinander angeordneten Lohscheiben für die formschlüssige Verankerung der Nadeln, sichern eine der Beanspruchung entsprechende Haltewirkung. Besonders vorteilhaft ist dabei die einfache Herstellung und leichte Auswechselbarkeit dieser Teile, wobei eine Nadelsorte für mehrere Statorgrössen verwendbar ist.

Die im Anspruch 5 angegebene Maßnahme ermöglicht in einfacher Weise eine selbsttätige Anpassung der Einziehnadel-Stellung an den festgelegten Verlauf der Statornuten, so dass Klemmungen und Reibstellen beim Einziehen weitgehend vermieden sind. Ausserdem ergibt sich dadurch eine Erweiterung der Anwendung dieser Nadelhalterungen bei Normmotoren mit geringen Abweichungen der Daten und bei schräggenuteten Statoren.

Die Ansprüche 6 - 9 befassen sich mit der besonderen Gestaltung der aus DE-B-2 658 891 bekannten Einziehnadel und deren Anpassung an das Einziehwerkzeug und an die bei Kleinmotoren gegebenen Dimensionen. Im Gegensatz zu den bekannten Einziehnadeln wird bei vorliegender Erfindung zur Verringerung des Raumbedarfs darauf verzichtet, die Fussteile der beiden flachen Nadelzungen durch Schweissen oder Nieten unlösbar zu verbinden. Nach Anspruch 6 werden die beiden Nadelzungen zum Einführen in die Halteöcher der Lochscheiben flach aneinander gelegt. Diese Vereinfachung ergibt neben der verbilligten Herstellung noch den Vorteil, dass jede Nadelzunge bei Beschädigung einzeln ausgewechselt werden kann, während bei den bekannten "grossen" Nadeln in einem Schadensfall die komplette Nadel unbrauchbar ist und durch eine neue ersetzt werden muss.

Das Merkmal nach Anspruch 9 ist als Hilfsmittel für das Einsetzen der Einziehnadeln in die Aufnahmelöcher der Lochscheiben vorgesehen, wobei die schadfreie Trennung der Nadelzungen zum separaten Auswechseln erhalten bleibt.

Die Ansprüche 10 bis 12 betreffen besonders zweckmäßige Einziehhilfen in Form eines Fixiersterns und einer Führungsplatte, welche bewirken, dass in dem engen Innenraum des Stators sich die einzelnen Spulenstränge beim Einziehen weder in radialer noch in tangentialer Richtung störend verlagern können. Die dadurch gesicherte Ordnung ist besonders auch für die Unterbringung der Etagenwicklungen von Wichtigkeit.

Die Brauchbarkeit der Erfindung beschränkt sich nicht auf die Serienfertigung von Kleinmotoren, sondern kann auch bei Reparaturarbeiten vorteilhaft eingesetzt werden, wobei sich die Verwendungsmöglicheiner Nadelgrösse für verschieden grosse Statoren besonders günstig auswirkt.

In den Zeichnungen sind Ausführungsbeispiele der erfindungsgemässen Arbeitsmittel schematisiert dargestellt. Es zeigt:

Fig. 1 eine Seitenansicht des Einziehwerkzeuges mit Einziehnadeln
Fig. 2 Teile der Fig. 1 von oben gesehen
Fig. 3 den Schnitt A/A aus Fig. 1 (vergrößert) mit Fixierstern Fig. 4 den Schnitt B/B aus Fig. 3
Fig. 5 den im Einspannkopf gehaltenen Stator mit dem Einziehwerkzeug (von oben gesehen)
Fig. 6 das Gerät in räumlicher Darstellung bei Beginn des Einziehens
Fig. 7 das Gerät mit eingesetzten Deckschiebern und Druckplatte
Fig. 8 das Gerät nach vollzogenem Einbringen der Spulen und Deckschieber in den Stator
Fig. 9 das Gesamtgerät mit Arbeitstisch

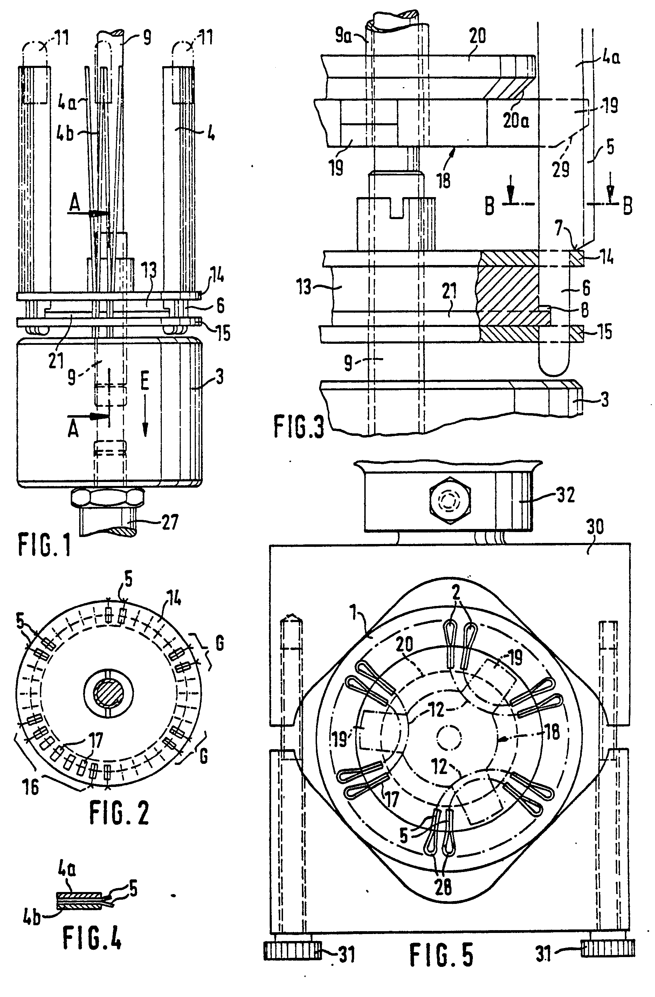

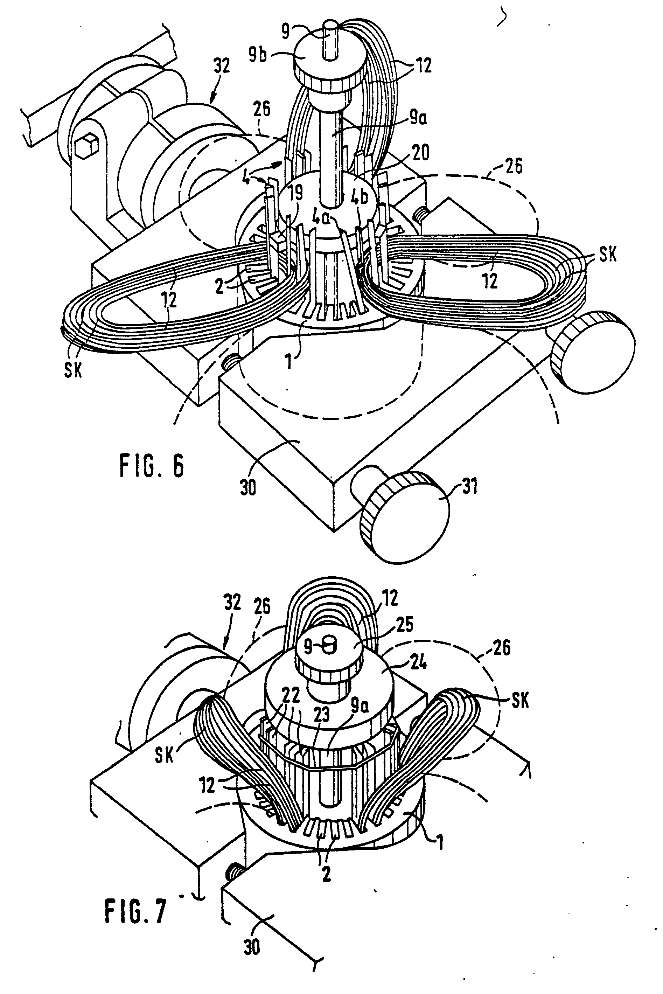

Die nachstehend beschriebenen Figuren 1 bis 9 (Blatt I, II, III) betreffen als Ausführungsbeispiel ein Arbeitsgerät, mit welchem eine sechspolige, mehrschichtige Statorbewicklung hergestellt werden kann. Dabei besitzt der Stator 1 sechsunddreissig Statornuten 2 (Fig. 5), in welche entsprechend der Polzahl drei symetrisch angeordnete Spulengruppen zu je zwei Spulen 12 zugleich in den Stator eingezogen werden. Dazu dienen die Einziehnadeln 4, welche je aus zwei elastischen Nadelzungen 4a, 4b bestehen und die mit ihren Fußteilen 6 am Einziehwerkzeug 3 fixierbar sind. Zu diesem Zweck sind zwei deckungsgleich ausgeführte Lochscheiben 14 und 15 vorgesehen, die je einen Lochkranz 16 besitzen, dessen Lochzahl jeweils mindestens der Nutenzahl des zu bewickelnden Stators entspricht, wobei die Lochweite für die Aufnahme der Fußteile 6 von zwei aneinandergelegten Nadelzungen passend ist. Die Lochscheiben sind mit Abstand übereinander an einem Verbindungskörper 13 angeordnet, welcher mit einem Bund 21 versehen ist.

Die Teile 13, 14, 15 sind an einem zentral durchgehenden Einziehschaft 9 durch Verschrauben befestigt, wobei die Befestigung der Lochscheiben 14 und 15 so gelockert sein kann, daß die Scheiben gegeneinander gering verdrehbar und, falls erforderlich, in einer Endstellung fixierbar sind.

Die elastischen Zungen 4a, 4b der Einziehnadel 4 sind je mit einer Führungsleiste 5 versehen, deren vorstehender Teil bis zum schmäleren Nadelfußteil 6 verläuft. An dieser Stelle ist eine Absetzkante 7 vorgesehen, welche das axiale Einschieben der Einziehnadel begrenzt. Außerdem ist am Fußteil 6 eine Ausnehmung 8 angeordnet (Fig. 3).

Das Bestücken des Einziehwerkzeugs 3 mit Einziehnadeln 4 erfolgt in der Weise, daß nach Befestigen der Teile 13, 14, 15 am Einziehschaft 9 die Einziehnadeln 4 entsprechend der Polzahl in Gruppen (G) mit ihren Fußteilen 6 in die Aufnahmelöcher 17 der Lochscheiben 14, 15 eingeschoben werden, bis ihre Absetzkante 7 an der oberen Lochscheibe 14 ansteht.

Gleichzeitig wird die Ausnehmung 8 des Nadelfußteiles 6 mit dem Bund 21 des Verbindungskörpers 13 zur formschlüssigen Einrastung gebracht, wobei die beiden Nadelzungen 4a und 4b flach aneinandergelegt werden (Fig. 4). Da die Weite des Aufnahmelochs 17 in den Lochscheiben 14, 15 der Dicke der beiden aneinanderliegenden Nadelfußteile 6 entspricht, so ergibt sich eine sichere Haltewirkung zwischen diesen Teilen. Das Einsetzen der Nadeln kann dadurch erleichtert werden, daß die Fußteile 6 vor dem Einsetzen paarweise miteinander so verklebt werden, daß sie zerstörungsfrei wieder trennbar sind.

Die formschlüssige und polrichtig gruppierte Befestigung der Einziehnadeln am Werkzeug 3 ist ausreichend stabil, um die beim Einziehen auftretenden Kräfte gleichmässig verteilt auf den Nadelkranz bzw. auf die darin eingesetzten Drahtspulen 12 zu übertragen.

Als Hilfe zum schnellen und sicheren Einfädeln der Spulen zwischen die gespreizten Zungen 4a, 4b der Einziehnadeln wird jeweils über die beiden benachbarten Zungen zweier Nadelgruppen eine elastische Haube 11 gestülpt, so daß durch diese Orientierungshilfe ein versehentliches Spuleneinfädeln zwischen die Einziehnadeln vermieden ist.

In Fig. 2 und 5 sind der Deutlichkeit wegen nur die Führungsleisten 5 der mit G bezeichneten sechs Nadelgruppen eingezeichnet. Die Fig. 5 zeigt außerdem strichpunktiert den Verlauf der in die Nadelgruppen eingefädelten Spulen 12. Diese werden durch einen von oben eingeschobenen Fixierstern 18 (Fig. 3) in der für das folgende Einziehen erforderlichen richtigen Lage gehalten, wobei gleichzeitig auch ein seitliches Ausweichen der Einziehnadeln verhindert wird. Diese Wirkungen sind dadurch gewährleistet, daß die radialen Mitnehmerarme 19 des Fixiersternes zwischen die Spulen 12 einer Gruppe bis annähernd an den inneren Statorrand hineinstehen. Außerdem sitzen die Arme 19 an der Unterseite einer kreisförmigen Führungsplatte 20, deren Durchmesser dem Innendurchmesser des Nadelkranzes entspricht, so daß auch ein radiales Verlagern der Einziehnadeln vermieden ist. Der Fixierstern 18 mit der Führungsplatte 20 ist mit dem Einziehschaft 9 derart verbindbar, daß die Platte 20 die Einziehbewegung (Pfeil E) auf die Spulenstränge zusätzlich übertragen kann. Die Mitnehmerarme 19 besitzen eine zugseitig abgeschrägte Stirnseite 29 und die Führungsplatte 19 ist mit einer Randabschrägung 20 a versehen.

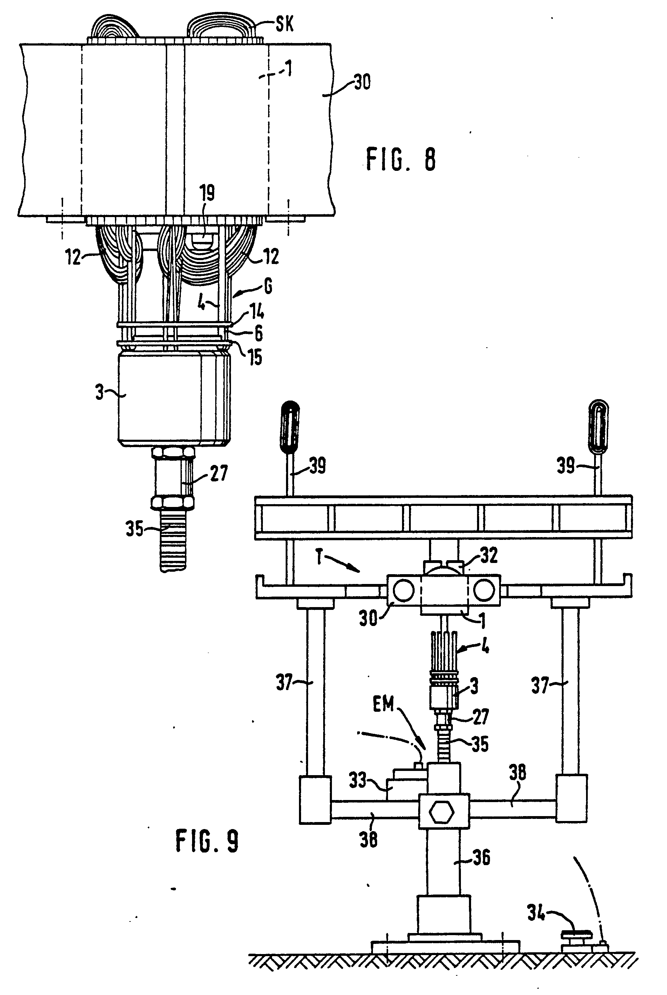

Der mit den Nutenisolierungen 28 versehene Stator 1 (Fig. 5) wird vor der Bestückung mit Einziehnadeln zwischen die Backen einer um eine Horizontalachse H drehbaren Spannvorrichtung 30 so eingesetzt, daß der obere Statorrand mit der Backenebene bündig ist. Anschließend wird die Statorachse zum zentralen Einziehschaft 9, z. B. durch eine innere Spannschere, zentriert. Das Einziehwerkzeug 3 wird durch eine Schaftkupplung 27 mit der Einziehmechanik (Fig. 8) verbunden. Nachdem die Vertikalachsen des Stators und des Einziehschaftes angeglichen sind, wird der Stator in der Spannvorrichtung 30 z. B. durch Spannschrauben 31 fixiert.

In Fig. 6 ist das Gerät unmittelbar vor Beginn des Einziehens dargestellt. Das mit Einziehnadeln 4 bestückte Einziehwerkzeug 3 ist von oben in den Stator 1 eingesetzt. Je zwei flache Drahtspulen 12 sind zwischen die Zungen 4a, 4b der benachbarten Nadeln 4 eingebracht und die Hauben 11 sind von den Einziehnadeln abgenommen. Ferner sind die Spulengruppen G durch die Schaltverbindungen 26 der ersten Wickeletage polrichtig verbunden. Der Fixierstern 18, 19 mit der Führungsplatte 20 ist an einem Distanzrohr 9a befestigt und in den Innenraum des Nadelkranzes eingeschoben, sodass die Mitnehmerarme 19 auf den Spulen 12 aufliegen. (vgl. auch Fig. 5).

Nachdem das Distanzrohr 9a z. B. durch eine Verschraubung 9b an den Einziehschaft 9 angeschlossen ist, wird der Motor 33 der Einziehmechanik EM (Fig. 9) durch den Fußschalter 34 eingeschaltet, so daß die Zugkraft über eine Zahnstange 35 den Einziehschaft 9 mit dem Einziehwerkzeug 3, den Einziehnadelgruppen G und dem Fixierstern 18, 19, 20 in Richtung E (Fig. 1) durch den Stator 1 hindurchbewegt. Die Spulen 12 werden dabei in die Statornuten 2 eingezogen wobei der Fixierstern 18, 19, 20 zugunsten der Einziehsicherheit und der Arbeitsgeschwindigkeit die Nadeln führt und zentriert. Als weitere Sicherung der Nadellage kann über den Nadelkranz ein (nicht gezeigter) Haltering gestülpt werden.

Durch diesen ersten Einziehhabschnitt werden die Einziehnadeln 4 so weit eingezogen, bis deren obere Enden mit der Statoroberkante bündig stehen, wobei der Fixierstern 18, 19, 20 weiterhin im Stator verbleibt. Wie die Fig. 7 zeigt, werden nun die Deckschieber 22 über die eingefahrenen Spulenstränge 12 und oberhalb der Einziehnadeln in die Nutenschlitze von oben eingesetzt und die nach oben freistehenden Teile der Deckschieber 22 durch einen elastischen Gürtel 23 nach der Statormitte ausgerichtet. Außerdem wird eine am Einziehschaft 9 zentrierte Druckplatte 24 auf die U-förmig profilierten Deckschieber 22 gesetzt und mit dem Einziehschaft 9 durch Schraubkupplung 25 verbunden, wobei die Zugverbindung zwischen den Teilen 9, 9a bestehen bleibt.

Bei dem nun folgenden zweiten Einziehabschnitt werden die Deckschieber 22 in die Statornuten durch die Druckplatte 24 eingeschoben und verschliessen dadurch die Nutenschlitze. Gleichzeitig werden die zwischen den Nadelzungen eingespannten Spulenstränge 12 zwangsweise durch das Werkzeug 3 (Fig. 1) mitgezogen, wobei der Fixierstern 18 die schon beschriebenen Hilfsfunktionen ausführt. Wenn die Druckplatte 24 an der Oberkante des Stators 1 aufliegt, sind alle Deckschieber eingeschoben, so daß die Druckplatte 24 nach Lösen der Schraubkupplung 25 abgenommen werden kann.

Das anschliessende weitere Einziehen wird so lange fortgesetzt, bis der in Fig. 8 gezeigte Zustand erreicht ist. Hier ist das Werkzeug 3 mit den Nadelgruppen G aus dem Stator 1 ausgefahren, so daß die Einziehnadeln 4 von den in den Statornuten festsitzenden Spulen 12 abgezogen werden können. Der Fixierstern 18 wird mit dem Werkzeug 3 aus dem Stator gezogen, wobei die abgeschrägten Stirnseiten 29 seiner Arme 19 die nach innen stehenden Spulenteile radial nach aussen drücken. Darauf wird die Schaftkupplung 27 gelöst, sodass das gesamte Einziehwerkzeug abgenommen werden kann.

Die in den Stator eingesetzten unteren und oberen Spulenköpfe werden in üblicher Weise abgebunden und mit einer Vorrichtung in die Endform gebracht. Dabei kann die Spannvorrichtung 30 mit dem Stator 1 am Schwenkkopf 32 in jede erforderliche Schwenklage gebracht und fixiert werden.

In Fig. 9 ist das Gesamtgerät mit Arbeitstisch T schematisiert dargestellt. An einem zentralen Träger 36 sind die stativartigen Stützen 37 für den Arbeitstisch höhenverstellbar und fixierbar geführt. Auf einem mit diesen Stützen verbundenen Querträger 38 ist der Motor 33 für den Antrieb der vertikalen Zahnstange 35 angeordnet, welche mit dem Werkzeug 3 durch die Schaftkupplung 27 verbindbar ist. Der Motor wird durch den Fußschalter 34 gesteuert. In der Höhe des Arbeitstisches ist die Statoreinspannvorrichtung 30 an dem Schwenkkopf 32 angebracht. Über dem Arbeitstisch sind Behälter für Zusatzteile und die Träger 39 für Vorratsspulen vorgesehen.

Die vorgestellten, übersichtlich angeordneten Arbeitsmittel und deren größtenteils mechanische Funktionen ermöglichen ein wirtschaftliches und kraftsparendes Bewickeln von Kleinstatoren. Die logische Folge und Einfachheit der einzelnen Arbeitsschritte erlauben den Einsatz von Hilfskräften bei gleichzeitiger Produktverbesserung.

**Patentansprüche**

1. Arbeitsverfahren zur Bewicklung der Statoren (1) von Elektromotoren, insbesondere von Kleinmotoren, wobei die Spulen (12) zwischen zwei spreizbaren elastischen Zungen (4a, 4b) von Einziehnadeln (4) einzeln oder in Gruppen eingesetzt und durch mechanische Mittel in die Statornuten (2) eingebracht werden, und wobei die Spulengruppen nach der Polzahl ausgelegt sind, so dass das Zusammenschalten der Spulen entsprechend der Polarität vor dem Einziehen vorgenommen werden kann, gekennzeichnet durch folgende, aneinandergereihte Verfahrensschritte:

a) der mit den Nutenisolierungen versehene Statorkörper (1) wird in Bezug auf einen zentralen, mit der Einziehmechanik (EM) gekuppelten vertikalen Einziehschaft (9) in vertikaler Achslage exakt zentriert und in Arbeitshöhe am höheninstellbaren Arbeitstisch (T) z. B. durch einen Einspannkopf (32) fixiert,

b) nachdem alle Einziehnadeln (4) in ein Einziehwerkzeug (3) polrichtig geordnet eingesetzt sind, wird dieses von oben zentrisch in den Stator eingeführt, wobei die Nadelzungen (4a, 4b) paarweise aneinandergelegt, jedoch nach oben gespreizt, bis zu einer vorbestimmten Nutenlänge axial in die Statornuten (2) eingeschoben werden, worauf das Werkzeug (3) mit dem Einziehschaft (9) der Einziehmechanik (EM) formschlüssig verbunden wird,

c) über die beiden benachbarten Zungen (4a, 4b) zweier nebeneinanderliegender Einziehnadeln wird eine elastische Haube (11) als Hilfe für das richtige Spuleneinsetzen gestülpt, worauf die Spulenstränge (12) zwischen die gespreizten Zungen eingefädelt werden.

d) nach Entfernen der elastischen Hauben (11) wird über die eingesetzten Spulenköpfe (SK) ein, die Einziehnadeln umfassender, Führungsring gestülpt und innerhalb des Nadelkranzes ein Fixierstern (18) als Einziehführung eingebracht, welcher mit dem Einziehschaft (9) formschlüssig verbunden wird,

e) im ersten Einziehabschnitt wird das mit den Spulen bestückte Werkzeug (3) mechanisch durch die Einziehmechanik (EM) so weit nach unten gezogen, bis die oberen Enden der Einziehnadeln (4) mit der Statoroberkante bündig stehen.

2. Arbeitsverfahren nach Anspruch 1, dadurch gekennzeichnet, daß in an sich bekannter Weise in die mit Spulen besetzten Statornuten (2) bzw. deren Schlitze (2a) nach unten je ein Deckschieber in die Statornut (2) geschoben wird, jedoch derart, daß der längere Teil des Deckschiebers frei nach oben steht, worauf diese Teile durch einen elastischen Gürtel (23) in vertikaler Lage gehalten werden, anschliessend wird auf die oberen Deckschieberenden eine Druckplatte (24) gesetzt und an den Einziehschaft (9) angeschlossen, worauf der zweite Einziehabschnitt erfolgt, wobei die Druckplatte gleichzeitig die Deckschieber (22) in die Nutenräume drückt, so daß diese verschlossen werden.

3. Arbeitsverfahren nach den vorhergehenden Ansprüchen, dadurch gekennzeichnet, daß nach dem völligen Einschieben der Deckschieber (22) der Gürtel (23) und die Druckplatte (24) abgenommen werden und das Einziehwerkzeug aus dem Stator nach unten ausgefahren wird, wobei der Fixierstern (18) im Einziehwerkzeug mitausgefahren wird, sodass die Spulenteile im unteren Statorbereich durch Abschrägungen (20 a) und (29) am Fixierstern radial nach aussen gedrückt werden.

4. Einziehwerkzeug zur Durchführung der Verfahrensschritte nach den vorhergehenden Ansprüchen, dadurch gekennzeichnet, daß das Werkzeug (3) einen Verbindungskörper (13) besitzt, in welchem der mit der Einziehmechanik verbindbare Einziehschaft (9) zentral befestigt ist und der zwischen zwei konzentrisch übereinander mit Abstand angeordneten Lochscheiben (14, 15) sitzt, welche am Rand für die formschlüssige Aufnahme der Einziehnadeln (4) mit deckungsgleichen Lochkränzen (16) versehen sind, deren Lochform dem Einsteckquerschnitt der Einziehnadel (4) entspricht, und wobei die Lochzahl, die Scheibendurchmesser und die Lochabstände jeweils von der Nutenzahl und dem inneren Durchmesser des zu bewickelnden Stators abhängen.

5. Einziehwerkzeug nach Anspruch 4, dadurch gekennzeichnet, daß die Lochscheiben (14, 15) gegenseitig verdrehbar am Einziehschaft (9) geführt und fixierbar sind.

6. Einziehwerkzeug nach Anspruch 4 mit Einziehnadeln (4), die aus zwei gleichgeformten elastischen Nadelzungen (4a, 4b) bestehen und an ihrem längeren Teil mit dünneren Führungsleisten (5) versehen sind, dadurch gekennzeichnet, daß die kürzeren Fußteile (6) der Einziehnadeln ein formschlüssiges Verankern in den Lochscheiben (14, 15) dadurch ermöglichen, daß je zwei aneinandergelegte Fußteile (6) in die korrespondierenden Aufnahmelöcher (17) der Lochscheiben einsteckbar sind.

7. Einziehwerkzeug nach Anspruch 6, dadurch gekennzeichnet, daß die beiden Fußteile (6) der Einziehnadel (4) je mit einer Absetzkante (7) versehen sind, mit welcher das axiale Einsetzen der Einziehnadel an der oberen Lochscheibe (14) begrenzbar ist.

8. Einziehwerkzeug nach den Ansprüchen 6 und 7, dadurch gekennzeichnet, daß die Fußteile (6) der Einziehnadel (4) je mit einer offenen Ausnehmung (8) versehen sind, in welche ein Bund (21) des Verbindungskörpers (13) formschlüssig einrastbar ist.

9. Einziehwerkzeug nach den Ansprüchen 6, 7 und 8, dadurch gekennzeichnet, daß die Einziehnadeln durch Verkleben ihrer Fußteile (6) paarweise miteinander verbindbar sind.

10. Einziehwerkzeug nach Anspruch 4, dadurch gekennzeichnet, daß der an einem zentralen Distanzrohr (9a) befestigte Fixierstern (18) gleich lange, mit gleicher Teilung radial angeordnete Mitnehmerarme (19) besitzt, welche beim Einziehvorgang zwischen die Nadelgruppen hineinragen, und dass die Anzahl dieser Arme der Anzahl der Spulenköpfe pro Phase angepaßt ist.

11. Einziehwerkzeug nach Anspruch 10, dadurch gekennzeichnet, daß der Fixierstern an einer kreisrunden Führungsplatte (20) konzentrisch befestigt ist, deren Ausserdurchmesser dem Innendurchmesser des Einziehnadelkranzes entspricht.

12. Einziehwerkzeug nach den Ansprüchen 10 und 11, dadurch gekennzeichnet, dass die Mitnehmerarme (19) zugseitig eine abgeschrägte Stirnfläche (29) und die Führungsplatte (20) eine Randabschrägung (20a) besitzen.

13. Einziehwerkzeug nach Anspruch 4, dadurch gekennzeichnet, dass dessen Einziehmechanik (EM) mit einer Blockierautomatik versehen ist, welche bei einem bestimmten Einziehstadium den die Einziehmechanik antreibenden Motor (33) stillsetzt.

**Claims**

1. Operating process for wrapping stators (1) of electric motors, in particular of low-power motors, wherein the coils (12) are inserted individually or in groups between two separable elastic latches (4a, 4b) of pull-in needles (4) and are introduced by mechanical means into the stator grooves (2), and wherein the coil groups are lain out according to the number of poles so that the coils can be inter-connected according to the polarity before being pulled-in, characterised by the following successive process steps:

(a) the stator body (1) provided with the groove insulators is centred exactly in a vertical axial position with respect to a central, vertical pull-in shaft (9) coupled to the pull-in mechanism (EM) and is fixed, for example by a clamping head (32), at the working height on the work table (T) of adjustable height,

(b) once all pull-in needles (4) have been inserted into a pull-in tool (3) according to poles, this pull-in tool (3) is introduced from above centrally into the stator, the needle latches (4a, 4b) being placed against one another in pairs, but being spread apart at the top and being pushed axially into the stator grooves (2) to a predetermined groove length, whereupon the tool (3) is positively connected to the pull-in shaft (9) of the pull-in mechanism (EM),

(c) an elastic cover (11) is slipped over the two adjacent latches (4a, 4b) of two neighbouring pull-in needles to assist correct insertion of the coils, whereupon the coil phases (12) are threaded between the spread latches,

(d) after removal of the elastic cover (11), a guide ring surrounding the pull-in needles is slipped over the inserted coil heads (SK) and, within the needle crown, there is introduced as pull-in guide means a fixing star (18) which is positively connected to the pull-in shaft (9),

(e) in the first pull-in phase, the tool (3) equipped with the coils is pulled down mechanically by the pull-in mechanism (EM) until the upper ends of the pull-in needles (4) are flush with the upper edge of the stator.

2. Operating process according to Claim 1, characterised in that, into the stator grooves (2) or the slots (2a) thereof occupied by coils, a respective sliding cover is slid downwards in known manner into the stator groove (2) but in such a way that the longer part of the sliding cover projects freely upwards, whereupon these parts are held in a vertical position by an elastic belt (23), a pressure plate (24) is then placed on the upper ends of the sliding cover and is connected to the pull-in shaft (9), whereupon the second pull-in phase takes place, the pressure plate simultaneously pressing the sliding cover (22) into the groove spaces so that the groove spaces are sealed.

3. Operating process according to the preceding claims, characterised in that, after complete insertion of the sliding cover (22), the belt (23) and the pressure plate (24) are removed and the pull-in tool is driven downwards out of the stator, the fixing star (18) being entrained in the pull-in tool so that the coil parts in the lower stator region are pressed radially outwards by bevels (20a) and (29) on the fixing star.

4. A pull-in tool for carrying out the process steps according to the preceding claims, characterised in that the tool (3) has a connecting member (13) in which the pull-in shaft (9) which can be connected to the pull-in mechanism is centrally fixed and which rests between two perforated plates (14, 15) spaced concentrically above one another, these perforated plates (14, 15) being provided on their edge with congruent perforated crowns (16) for positively receiving the pull-in needles (4), the shape of the perforations corresponding to the insertion cross-section of the pull-in needles (4) and wherein the number of disks, the disk diameter and the spacing of perforations depend upon the number of grooves and the internal diameter of the stator to be wrapped in each case.

5. A pull-in tool according to Claim 4, characterised in that the perforated plates (14, 15) are mutually rotatably guided on the pull-in shaft (9) and can be fixed.

6. A pull-in tool according to Claim 4 with pull-in needles (4) which consist of two identically shaped elastic needle latches (4a, 4b) and are provided on their longer part with relatively thin guide strips (5), characterised in that the short butt parts (6) of the pull-in needles allow positive fixing in the perforated plates (14, 15) since each two superimposed butt parts (6) can be inserted into the corresponding receiving perforations (17) in the perforated plates.

7. A pull-in tool according to Claim 8, characterised in that the two butt parts (6) of the pull-in needles (4) are each provided with an offset edge (7) with which the axial insertion of the pull-in needles can be limited on the upper perforated plate (14).

8. A pull-in tool according to Claims 6 and 7, characterised in that the butt parts (6) of the pull-in needles (4) are each provided with an open recess (8) into which a collar (21) of the connecting member (13) can be positively engaged.

9. A pull-in tool according to Claims 6, 7 and 8, characterised in that the pull-in can be joined together in pairs by adhesion of their butt parts (6).

10. A pull-in tool according to Claim 4, characterised in that the fixing star (18) fixing on central spacer tube (9c) has entraining arms (19) of equal length which are arranged radially with equal pitch and penetrate between the groups of needles during the pull-in process and in that the number of such arms is adapted to the number of coil heads per phase.

11. A pull-in tool according to Claim 10, characterised in that the fixing star is fixed concentrically on a circular guide plate (20), the external diameter of which corresponds to the internal diameter of the pull-in needle crown.

12. A pull-in tool according to Claims 10 and 11, characterised in that the entraining arms (19) have on the pulling side a bevelled end face (29) and the guide plate (20) has a bevelled edge (20a).

13. A pull-in tool according to Claim 4, characterised in that the pull-in mechanism (EM) thereof is provided with an automatic locking device which stops the motor (33) driving the pull-in mechanism at a certain stage of pulling-in.

## Revendications

1. Procédé pour bobiner les stators (1) de moteurs électriques, en particulier des moteurs de faible puissance, les bobines (12) étant placées entre deux lames élastiques écartables (4a, 4b) d'aiguilles d'insertion individuellement ou en groupes et étant insérées, par des moyens mécaniques, dans les gorges de stator (2), et les groupes de bobines étant choisis selon le nombre de pôles, de sorte que l'interconnexion des bobines peut être réalisée, de façon correspondante à la polarité, avant l'insertion, caractérisé par les étapes successives suivantes:

a) le corps de stator (1), muni des isolations de gorge, est centré exactement, en position axiale verticale, relativement à un arbre d'insertion central vertical (9), couplé au mécanisme d'insertion (EM), et est fixé, à la hauteur de travail, à la table de travail réglable en hauteur (T), par exemple par une tête de serrage (32),

b) après que toutes les aiguilles d'insertion (4) sont placées, de façon correctement ordonnée par pôle, dans un outil d'insertion (3), celui-ci est mis en place dans le stator de façon centrée du haut, les lames d'aiguilles (4a, 4b) étant disposées par paire l'une à côte de l'autre, en étant cependant écartées vers le haut, sont insérées axialement dans les gorges de stator (2) jusqu'à une profondeur de gorge prédéterminée, après quoi l'outil (3) est relié mécaniquement à l'arbre (9) du mécanisme d'insertion (EM),

c) un capot élastique (11) est disposé sur les deux lames voisines (4a, 4b) de deux aiguilles d'insertion adjacentes, pour faciliter la mise en place correcte des bobines, après quoi les brins de bobine (12) sont bobinés entre les lames écartées,

d) après enlèvement des capots élastiques (11), une bague de guidage entourant les aiguilles d'insertion est montée sur les têtes de bobine (SK) mises en place et, à l'intérieur de la couronne d'aiguilles, une étoile de fixation (18), en tant que guide d'insertion, est mise en place, laquelle est reliée mécaniquement à l'arbre d'insertion (9),

e) dans la première étape d'insertion, l'outil (3) équipé des bobines est tiré mécaniquement vers le bas par le mécanisme d'insertion (EM), jusqu'à ce que les extrémités supérieures des aiguilles d'insertion (4) soient à fleur du bord supérieur du stator.

2. Procédé selon la revendication 1, caractérisé en ce que, de façon connue en soi, dans les gorges de stator (2) occupées par des bobines ou leurs rainures (2a), est glissée vers le bas une coulisse de recouvrement dans la gorge de stator (2), de sorte que, cependant, la partie la plus longue de la coulisse de recouvrement soit libre vers le haut, ces parties étant maintenues en position verticale par une courroie élastique (23), puis une plaque de pression (24) est placée sur les extrémités supérieures des coulisses de recouvrement et reliée à l'arbre d'insertion (9), après quoi a lieu la deuxième étape d'insertion, la plaque de pression pressant en même temps les coulisses de recouvrement (22) dans les gorges, de sorte que celles-ci soient fermées.

3. Procédé selon les revendications précédentes,

caractérisé en ce que, après l'enfichage complet des coulisses (22), la courroie (23) et la plaque de pression (24) sont enlevées, et l'outil d'insertion est retiré du stator vers le bas, l'étoile de fixation (18) dans l'outil d'insertion étant également retirée, de sorte que les parties de bobine dans la zone inférieure du stator sont pressées radialement vers l'extérieur contre l'étoile de fixation par des chanfreins (20a) et (29).

4. Outil d'insertion pour la mise en oeuvre du procédé selon les revendications précédentes,

caractérisée en ce que l'outil (3) possède un corps de liaison (13), dans lequel l'arbre d'insertion (9) pouvant être relié au mécanisme d'insertion est fixé centralement, et qui se trouve entre deux disques perforés (14, 15) agencés concentriquement l'un au-dessus de l'autre à un certain écartement, lesquels, à la périphérie, sont munis de couronnes perforées (16) coïncidentes pour la réception mécanique des aiguilles d'insertion (4), dont la forme des trous correspond à la section transversale d'enfichage des aiguilles (4), le nombre de trous, le diamètre des disques et la distance des trous dépendant, à chaque fois, du nombre de gorges et du diamètre interne du stator à bobiner.

5. Outil selon la revendication 4,

caractérisé en ce que les disques perforés (14, 15) sont guidés sur l'arbre (9) en pouvant tourner l'un par rapport à l'autre, et peuvent être fixés.

6. Outil selon la revendication 4, comportant des aiguilles d'insertion (4), qui sont constituées de deux lames (4a, 4b) élastiques de conformation identique et, sur leur partie la plus longue, sont munies de baguettes de guidage plus minces (5),

caractérisé en ce que les pieds plus courts (6) des aiguilles permettent un ancrage mécanique dans les disques perforés (14, 15), en ce que deux pieds adjacents (6) peuvent être enfichés dans les trous de réception correspondants (17) des disques perforés.

7. Outil selon la revendication 6,

caractérisé en ce que les deux pieds (6) de l'aiguille (4) sont munis, chacun, d'un bord étagé (7), grâce auquel l'insérage axial de l'aiguille peut être limité contre le disque perforé supérieur (14).

8. Outil selon les revendications 6 et 7,

caractérisé en ce que les pieds (6) de l'aiguille (4) sont munis, chacun, d'un évidement ouvert (8), dans lequel un lien (21) du corps de liaison (13) peut être mécaniquement fixé.

9. Outil selon les revendications 6, 7 et 8,

caractérisé en ce que les aiguilles d'insertion peuvent être reliées les unes aux autres par paire, par collage de leurs pieds (6).

10. Outil selon la revendication 4, caractérisé en ce que l'étoile de fixation (18) fixée à une entretoise centrale (9) possède des bras d'entraînement (19), de même longueur, agencés radialement de façon régulièrement répartie, lesquels, lors de l'insertion, font saillie entre les groupes d'aiguilles, et en ce que le nombre de ces bras est adapté au nombre de têtes de bobines par phase.

11. Outil selon la revendication 10, caractérisé en ce que l'étoile de fixation est fixée concentriquement à une plaque de guidage circulaire (20), dont le diamètre externe correspond au diamètre interne de la couronne d'aiguilles d'insertion.

12. Outil selon les revendications 10 et 11, caractérisé en ce que les bras d'entraînement (19) possèdent, du côte de traction, une face frontale chanfreinée (29) et la plaque de guidage (20) un bord chanfreiné (20a).

13. Outil selon la revendication 4, caractérisé en ce que son mécanisme d'insertion (EM) est muni d'un automatisme de blocage, lequel, pour un stade d'insertion déterminé, arrête le moteur (33) entraînant le mécanisme d'insertion.

FIG.1

FIG. 2

FIG.3

FIG.4

FIG. 5

FIG. 6

FIG. 7

FIG. 8

FIG. 9